# EUROPEAN PATENT APPLICATION

(11) **EP 3 787 145 A1**
(43) Date of publication of application: **03.03.2021**
(21) Application number: 20193182.1
(22) Date of filing: 27.08.2020
(51) Int. Cl.: H02J 7/00

(54) **MULTI-BATTERY POWER SYSTEM**

(30) Priority: 27.08.2019 CN 201910795221
(71) Applicant: Globe (Jiangsu) Co., Ltd., Zhonglou District Changzhou, Jiangsu 213023 (CN)
(72) Inventor: ZHUANG, Xian, Changzhou, Jiangsu 213023 (CN); LIU, Chuanjun, Changzhou, Jiangsu 213023 (CN); LUO, Ming, Changzhou, Jiangsu 213023 (CN)
(74) Representative: Bergenstråhle Group AB

(57) **Abstract**

The invention provides a power system comprising a first battery pack and a second battery pack which are arranged in parallel, a first switch connected in series between the first battery pack and an electrical load for connecting or disconnecting the first battery pack and the electrical load, and/or a second switch connected in series between the second battery pack and the electrical load for connecting or disconnecting the second battery pack and the electrical load. The power system further comprises a control for detecting a voltage difference between the first battery pack and the second battery pack, and closing the first switch/second switch when the voltage difference is less than a preset value in order that the first battery pack and the second battery pack supply power/charge in parallel.

## Description

### Technical Field

The invention relates to a power system, in particular to a power system for being connected to a power tool or a charger.

### Background

Existing hand-held power tools, such as chain saws, hedge trimmer, etc., are powered by detachable battery pack, and one battery usually can meet the power supply requirements, because of the hand-held power tools with lower power.

For some power tools with higher power, such as lawn mowers, snow blowers, etc., when one battery cannot meet the power supply demanding, two battery pack are often used in parallel to improve the power supply of the entire battery pack device, thereby increasing working time and efficiency of the power tools.

When two battery pack are used in parallel to supply energy to the power tool with higher power, it has the disadvantages that when the voltages of two battery devices are not equal, if they are directly connected in parallel, the battery device with a high voltage will back-charge the current to the battery device with low voltage, so the power supply cannot be balanced and the power supply efficiency is affected.

In view of this, it is necessary to improve the existing battery device to solve the above-mentioned problems.

### Summary of Invention

An object of the present invention is to provide a power system which can balance power supply/charge without back-flow current and mutual charging.

To achieve the above object, the present invention provides a power system, comprising:
a first battery pack and a second battery pack, wherein the first battery pack and the second battery pack are arranged in parallel;
a first switch connected in series between the first battery pack and a load, for the connection or the disconnection between the first battery pack and the load; and/or
a second switch connected in series between the second battery pack and the load, for the connection or the disconnection between the second battery pack and the load; and
a control device is used to detect the voltage difference between the first battery pack and the second battery pack, and make the first switch/second switch to be closed when the voltage difference is less than a preset value, so that the first battery pack and the second battery pack are powered/charged in parallel.

As a further improvement of the present invention, the second switch is in a normally closed state, the first switch is opened in the initial state, when the voltage difference between the first battery pack and the second battery pack is less than a preset value, the control device make the first switch to be closed.

As a further improvement of the present invention, in the initial state, the first switch is closed and the second switch is opened, and the first battery pack alone provides the power. When the voltage difference between the first battery pack and the second battery pack is less than a preset value, the control device make the second switch to be closed for making the first battery pack and the second battery pack be powered or charged in parallel.

As a further improvement of the present invention, the control device is further configured to obtain the voltage of the first battery pack, and make the first switch to be opened and the second switch to be closed when the voltage is less than a specific value, the second battery pack alone supplies power. When the voltage difference between the first battery pack and the second battery pack is less than a preset value, the control device causes the first switch to be closed for making the first battery pack and the second battery pack be powered in parallel.

As a further improvement of the present invention, the control device is further configured to obtain a voltage of the first battery pack, and control an external power source to charge the first battery pack when the voltage is less than a specific value. When the voltage difference between the first battery pack and the second battery pack is less than a preset value, the control device controls the second switch to be closed, so that the first battery pack and the second battery pack are charged in parallel.

As a further improvement of the present invention, the control device comprises a first detection unit electrically connected to the first battery pack, a second detection unit electrically connected to the second battery pack, and a control unit electrically connected to the first battery pack and the second battery pack, respectively. The first detection unit is configured to detect the voltage of the first battery pack and transmit it to the control unit, the second detection unit is configured to detect the voltage of the second battery and transmit it to the control unit for making the first switch/second switch to be opened or closed.

As a further improvement of the present invention, the preset value is 5V.

As a further improvement of the present invention, the load is a power tool, the first battery pack and the second battery pack are used to supply power to the power tool in parallel, and the power system is received in the battery-receiving housing of the power tool.

As a further improvement of the present invention, the load is a charger, the first battery pack and the second battery pack are charged in parallel by the charger, and the power system is received in the battery-receiving portion of the charger.

To achieve the above object, the present invention provides a power system, which comprises a first battery pack and a second battery pack arranged in parallel, a first diode connected in series between the first battery pack and a load, and a second diode connected in series between the second battery pack and the load. The first diode is connected to the same pole of the first battery pack, and the second diode is connected to the same pole of the second battery pack.

The beneficial effect of the present invention is that the power system of the present invention can control the first switch or the second switch to be closed when the voltage difference is less than a preset value by detecting the voltage difference between the first battery pack and the second battery pack. The first battery pack and the second battery pack are connected in parallel for power supply/charging to achieve balanced power supply/charging without the phenomenon of reverse current and mutual charging.

### Brief Description of Drawings

FIG. 1 is a schematic circuit diagram of a first embodiment of a power system according to the present invention.
FIG. 2 is a working principle diagram of the power system shown in FIG. 1.
FIG. 3 is a structural block diagram of a second embodiment of the power system of the present invention.
FIG. 4 is a working principle diagram of the power system shown in FIG. 3.
FIG. 5 is a structural block diagram of a third embodiment of the power system of the present invention.
FIG. 6 is a working principle diagram of the power system shown in FIG. 5.
FIG. 7 is a schematic circuit diagram of a fourth embodiment of the power system of the present invention.

### Description of Embodiment

In order to make the objectives, technical solutions, and advantages of the present invention clearer, the following describes the present invention in detail with reference to the accompanying drawings and specific embodiment.

The invention discloses a power system, which is mainly used to supply power to a load or be charged by a load. Specifically, when the load is a power tool, the power system of the present invention is used to power a power tool, and when the load is a charger, the power system of the present invention can be charged by the charger.

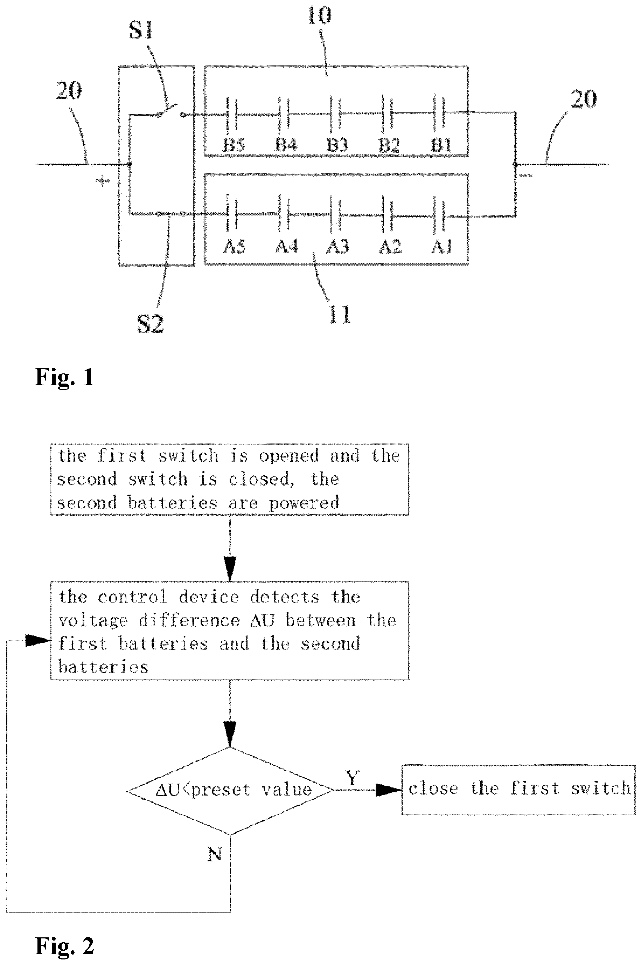

As shown in FIG. 1, it is the first embodiment of the power system of the present invention. In this embodiment, the power system includes a first battery pack 10, a second battery pack 11, a first switch S1, a second switch S2, and a control device (not shown). The first battery pack 10 and the second battery pack 11 are arranged in parallel. Both ends of the first battery pack 10 are connected to the positive and negative poles of the load 20 respectively, and both ends of the second battery pack 11 are also connected to the positive and negative poles of the load 20 respectively, so the electrical connection between the first battery pack 10, the second battery pack 11 and the load 20 can be realized.

The first switch S1 is connected in series between the first battery pack 10 and the load 20, which is used to turn on or off the connection between the first battery pack 10 and the load 20. The second switch S2 is connected in series between the second battery pack 11 and the load 20, which is used to turn on or off the connection between the second battery pack 11 and the load 20. In this embodiment, the second switch S2 is in a normally closed state to maintain a continuous electrical connection between the second battery pack 11 and the load 20, and it can also be understood that the second switch S2 does not exist. The purpose of describing it is only for clarity and convenience of description.

The control device is configured to detect the voltage difference ΔU between the first battery pack 10 and the second battery pack 11. When the voltage difference ΔU is less than a preset value, the first switch S1 would be closed for making the first battery pack 10 and the second battery pack 11 to supply power/charge in parallel. The preset value here is preferably 5V.

Specifically, the control device includes a first detection unit electrically connected to the first battery pack 10, a second detection unit electrically connected to the second battery pack 11, and a control unit electrical connected to the first detection unit and the second detection unit, respectively. The first detection unit is configured to detect the voltage of the first battery pack 10 and transmit the detected voltage value to the control unit, and the second detection unit is configured to detect the voltage of the second battery pack 11 and transmit the detected voltage value to the control unit. The control unit is used to control the opening or closing of the first switch S1.

When the load 20 is a power tool, the power system of the present invention can be used to supply power to the power tool. The power system is received in a battery-receiving portion of the power tool, and the first battery pack 10 and the second battery pack 11 are detachable received in the battery-receiving portion of the power tool. Specifically, the first battery pack 10 and the second battery pack 11 may be inserted into the battery-receiving portion as two separate batteries, or may be integrated into one battery pack and inserted into the battery-receiving portion. The installation positions of the first detection unit and the second detection unit are not limited, and they can be set inside the battery pack together or outside the battery pack.

As shown in Figure 2, the working principle of the power system as follows: in the initial state, the first switch S1 is opened, the second switch S2 is closed, and the second battery pack 11 alone supplies power to the power tool, so that the power tool is turned on and started; then, the first detection unit detects the voltage of the first battery pack 10 and transmits the detected voltage value to the control unit, while the second detection unit detects the voltage of the second battery pack 11 and transmits the detected voltage value to the control unit; and the control unit calculates the voltage difference ΔU between the first battery pack 10 and the second battery pack 11 and compares the obtained voltage difference ΔU with a preset value; if the voltage difference ΔU is less than the preset value (5V), the control unit controls the first switch S1 to close for the parallel power supply of the first battery pack 10 and the second battery pack 11 to the power tool; if the voltage difference ΔU is more than a preset value (5V), the control unit controls the first switch S1 to continue to open to prevent the first battery pack 10 and the second battery pack 11 from charging each other until the voltage difference ΔU is less than the preset value, then the control unit controls the first switch S1 to close for the parallel power supply of the first battery pack 10 and the second battery pack 11.

When the load 20 is a charger, the first battery pack 10 and the second battery pack 11 can be charged by the charger. The power system is received in a battery-receiving portion of the charger, and the first battery pack 10 and the second battery pack 11 are detachably received in the battery-receiving portion of the charger. Specifically, the first battery pack 10 and the second battery pack 11 may be inserted into the battery-receiving portion as two separate batteries, or may be integrated into a battery pack and inserted into the battery-receiving portion. The installation positions of the first detection unit and the second detection unit are not limited, and they can be set inside the battery pack together or outside the battery pack.

The working principle of the power system as follow: in the initial state, the first switch S1 is opened and the second switch S2 is closed, and the charger charges the second battery pack 11; then, the first detection unit detects the voltage of the first battery pack 10 and transmits the detected voltage value to the control unit, while the second detection unit detects the voltage of the second battery pack 11 and transmits the detected voltage value to the control unit; then, the control unit calculates the voltage difference ΔU of one battery pack 10 and the second battery pack 11, and the obtained voltage difference ΔU is compared with a preset value; if the voltage difference ΔU is less than a preset value (5V), the control unit controls the first switch S1 to close for parallel charging of the first battery pack 10 and the second battery pack 11 by the charger; if the voltage difference ΔU is more than a preset value (5V), the control unit controls the first switch S1 to continue to open to prevent the first The battery pack 10 and the second battery pack 11 are mutually charged until the voltage difference ΔU is less than a preset value, and then the control unit controls the first switch S1 to close for parallel charging of the first battery pack 10 and the second battery pack 11.

In this embodiment, the first detection unit is a detection chip provided at the front end of the first switch S1, the second detection unit is a detection chip provided at the front end of the second switch S2, and the control unit is a main controller provided in the battery-receiving portion .

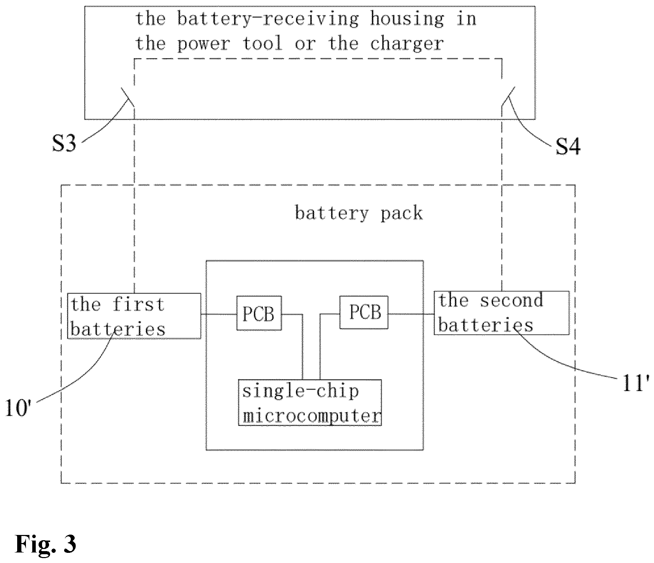

As shown in FIG. 3, it is a second embodiment of the power system of the present invention. In this embodiment, the structure of the power system is substantially same as the first embodiment, and the main difference is that: 1, the first detection unit and the second detection unit are both circuit boards (PCB) and are both provided inside the battery pack, the control unit is a single-chip microcomputer set on the power tool or the charger, and the single-chip microcomputer is integrated inside the battery pack; 2, In the initial state, the first switch S3 is closed and the second switch S4 is opened, and only the first battery pack 10' supplies power; 3, when the voltage difference ΔU between the first battery group 10' and the second battery group 11' is less than a preset value (5V), the control unit controls the first switch S3 or the second switches S4 close for parallel power supply/charging of the first battery pack 10 'and the second battery pack 11'.

Specifically, when the load 20 is a power tool, the power system of the present invention can be used to the power tool. At this time, the power system is received in the battery-receiving portion of the power tool, and the first battery pack 10' and the second battery pack 11' is detachably received in the battery-receiving portion of the power tool. Specifically, the first battery pack 10' and the second battery pack 11' are integrally packaged so that the battery pack is inserted into the battery-receiving portion.

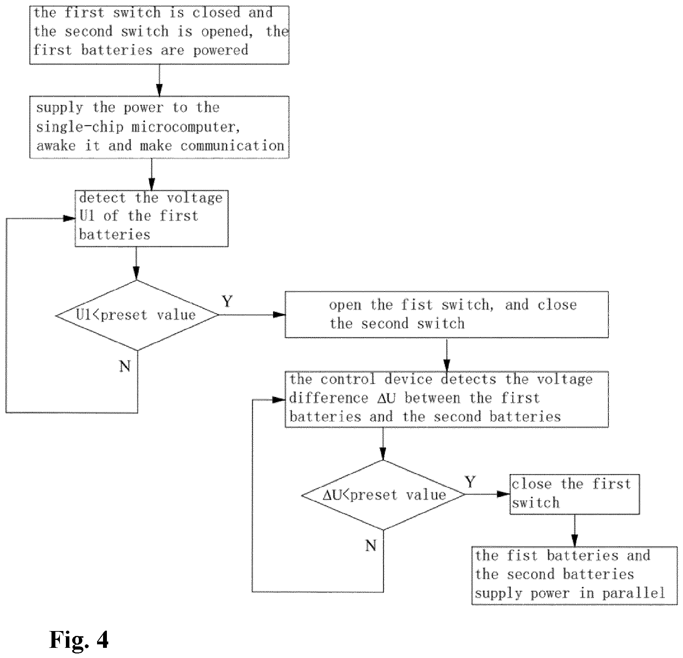

As shown in FIG. 3 and FIG. 4, at this time, the working principle of the power system is described below: in the initial state, the first switch S3 is closed and the second switch S4 is opened, and the first battery pack 10' alone supplies power to the power tool to make the power tool turn on and start; then, the first detection unit detects the voltage of the first battery pack 10' and transmits the detected voltage value U1 to the control unit; if the control unit judges that the current voltage value U1 is less than a specific value ( (i.e., the normal standard voltage value), the first switch S3 is controlled to open and the second switch S4 is controlled to close to supply power to the power tool from the second battery pack 11'; then, the second detection unit detects the voltage of the second battery pack 11' and transmits the detected voltage value to the control unit. The control unit calculates the voltage difference ΔU between the first battery pack 10' and the second battery pack 11', and compares the obtained voltage difference ΔU with the preset value; if the voltage difference ΔU is less than the preset value (5V), the control unit controls the first switch S3 to close to realize the parallel power supply of the first battery pack 10' and the second battery pack 11' to the power tool. Of course, if the voltage difference ΔU is more than the preset value (5V), the control unit controls the first switch S3 to continue to open to prevent the first battery pack 10' and the second battery pack 11' from charging each other until the voltage difference ΔU is less than the preset value, the control unit then controls the first switch S3 to close to realize the parallel power supply of the first battery pack 10' and the second battery pack 11'.

When the load 20 is a charger, the first battery pack 10' and the second battery pack 11' may be charged by the charger. At this time, the power system is received in the battery-receiving portion of the charger, and the first battery pack 10' and the second battery pack 11' are detachably received in the battery-receiving portion of the charger. Specifically, the first battery pack 10' and the second battery pack 11' are integrally packaged so that the battery pack is inserted into the battery-receiving portion.

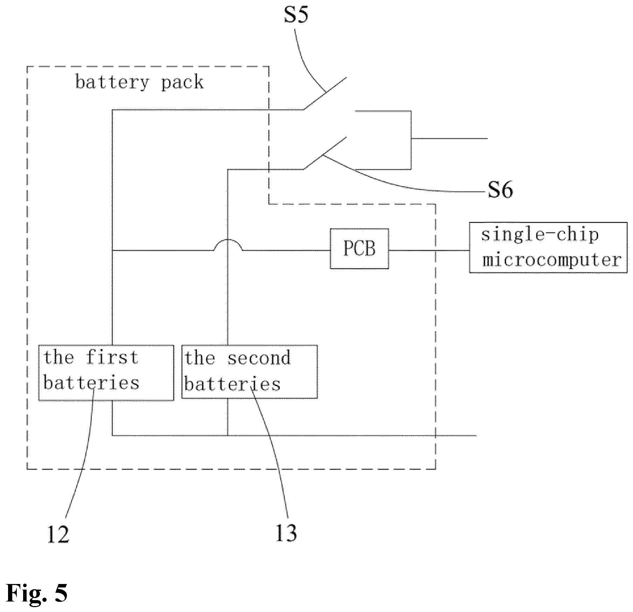

As shown in FIG. 5, it is a third embodiment of the power system of the present invention. Compared with the second embodiment of FIG. 3, the difference is mainly that the single-chip microcomputer is located outside the battery pack.

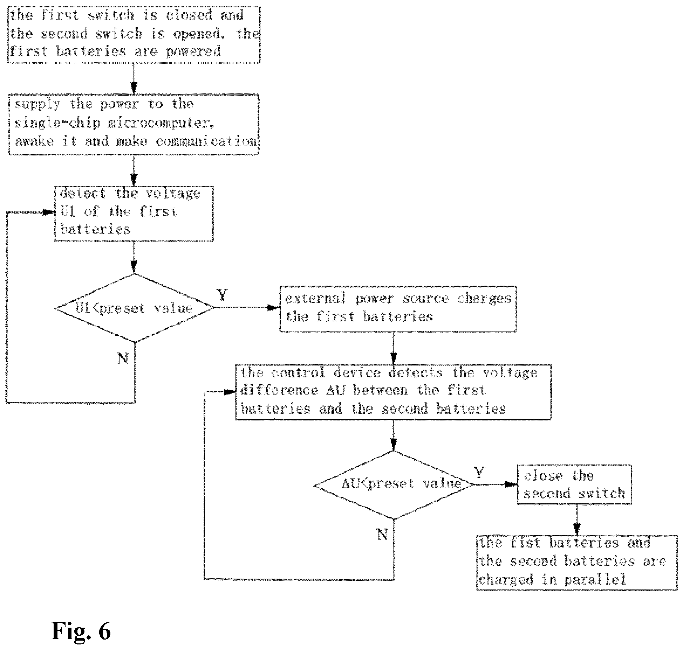

As shown in FIG. 5 and FIG. 6, at this time, the working principle of the power system is described below: in the initial state, the first switch S5 is closed and the second switch S6 is opened, and the first battery pack 12 alone supplies power to the charger, so that the charger is turned on and started; then, the first detection unit detects the voltage of the first battery pack 12 and transmits the detected voltage value U1 to the control unit; if the control unit judges that the current voltage value U1 is less than a specific value (i.e., the normal standard voltage value), the external power source is controlled to charge the first battery pack 12; then, the first detection unit continues to detect the unit voltage of the first battery pack 12 in real time and transmits the detected voltage value to the control unit, the control unit calculates the voltage difference ΔU of the first battery pack 12 and the second battery pack 13 and compares the obtained voltage difference ΔU with a preset value; if the voltage difference ΔU is less than the preset value (5V), the control unit controls the second switch S6 to be closed to realize parallel charging of the first battery pack 12 and the second battery pack 13. Of course, if the voltage difference ΔU is more than a preset value (5V), the control unit controls the second switch S6 to continue to open to prevent the first battery pack 12 and the second battery pack 13 from charging each other until the voltage difference ΔU is less than the preset value. At this time, the control unit controls the second switch S6 to close to realize parallel charging of the first battery pack 12 and the second battery pack 13.

In this embodiment, the first detection unit and the second detection unit are both a circuit board (PCB) and are provided together in the battery pack. The control unit is a single-chip microcomputer set on a power tool or a charger, and the specific settings of the single-chip microcomputer is not limited. In the initial state, the first battery pack 12 directly supplies power to the circuit board and the single-chip microcomputer individually, so that the single-chip microcomputer is turned on or awaken.

Of course, the single-chip microcomputer can also be used to obtain the temperatures of the first battery pack 12 and the second battery pack 13 to decide the damage of the first battery pack 12 and the second battery pack 13 according to the temperature and the voltage, which will not be described in detail here.

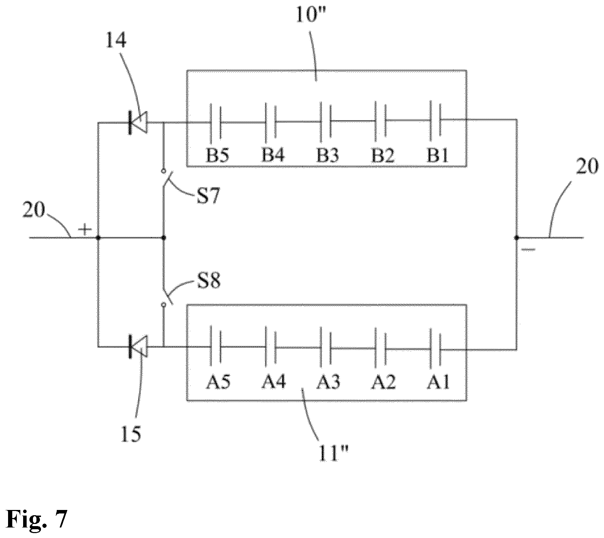

As shown in FIG. 7, it is a fourth embodiment of the power system of the present invention. In this embodiment, the power system includes a first battery pack 10" and a second battery pack 11" arranged in parallel, a first diode 14 connected in series between the first battery pack 10" and the load 20, and a second diode 15 connected in series between the second battery pack 11" and the load 20. The first diode 14 is connected to the same pole of the first battery pack 10", and the second diode 15 is connected to the same pole of the second battery pack 11".

The power system further includes a first switch S7 provided in parallel with the first diode 14 and a second switch S8 provided in parallel with the second diode 15. When the load 20 is a power tool, the power system can be used to power the power tool. At this time, the first switch S7 and the second switch S8 are turned off. When the load 20 is a charger, the first battery pack 10" and the second battery pack 11" can be charged using the charger. At this time, the first switch S7 and the second switch S8 are closed.

In this embodiment, the arrangement of the first diode 14 and the second diode 15 can prevent the first battery pack 10" and the first battery pack 10" from mutual charging when the first battery pack 10" or the second battery pack 11" has a large voltage, which obtains a simple structure.

In summary, the power system of the present invention uses the control device to detect the voltage difference ΔU between the first battery pack 10, 10', 12, 10" and the second battery pack 11, 11', 13, 11", so when the voltage difference ΔU is less than a preset value (5V), the first switches S1, S3, S5, S7 and the second switches S2, S4, S6, S8 are controlled to close. The first battery pack 10, 10', 12, 10" and the second battery pack 11, 11', 13, 11" are connected in parallel for power supply/charging to achieve balanced power supply/charging, and the phenomenon of reverse current and mutual charging will not occur.

The above embodiments are only used to illustrate the technical solution of the present invention and are not limited herein. Although the present invention is described in detail with reference to the preferred embodiments, those skilled in the art should understand that the technical solution of the present invention may be modified or equivalently replaced without departing from the spirit and scope of the technical solution of the present invention.

## Claims

1. A power system, comprising:
a first battery pack (10, 10', 12, 10") and a second battery pack (11, 11', 13, 11"), **characterized in that**
the first battery pack (10, 10', 12, 10") and the second battery pack (11, 11', 13, 11") are arranged in parallel;
a first switch (S1, S3, S5, S7) connected in series between the first battery pack (10, 10', 12, 10") and a load (20), for the connection or the disconnection between the first battery pack (10, 10', 12, 10") and the load (20); and/or
a second switch (S2, S4, S6, S8) connected in series between the second battery pack (11, 11', 13, 11") and the load (20), for the connection of disconnection between the second battery pack (11, 11', 13, 11") and the load (20); and
a control device for detecting a voltage difference between the first battery pack (10, 10', 12, 10") and the second battery pack (11, 11', 13, 11"), and controlling the first switch (S1, S3, S5, S7)/ second switch (S2, S4, S6, S8) to close when the voltage difference is less than a preset value, so that the first battery pack (10, 10', 12, 10") and the second battery pack (11, 11', 13, 11") are powered/charged in parallel.

2. The power system according to claim 1, **characterized in that**, the second switch (S2, S4, S6, S8) is in a normally closed state, the first switch (S1, S3, S5, S7) is opened in an initial state, when the voltage difference between the first battery pack (10, 10', 12, 10") and the second battery pack (11, 11', 13, 11") is less than a preset value, the control device controls the first switch (S1, S3, S5, S7) to close.

3. The power system according to claim 1 or 2,**characterized in that**, in an initial state, the first switch (S1, S3, S5, S7) is closed and the second switch (S2, S4, S6, S8) is opened, and the first battery pack (10, 10', 12, 10") provides the power along; when the voltage difference between the first battery pack (10, 10', 12, 10") and the second battery pack (11, 11', 13, 11") is less than a preset value, the control device controls the first switch (S1, S3, S5, S7) or the second switch (S2, S4, S6, S8) to close to make the first battery pack (10, 10', 12, 10") and the second battery pack (11, 11', 13, 11") be powered or charged in parallel.

4. The power system according to claim 3, **characterized in that** the control device is further configured to obtain a voltage of the first battery pack (10, 10', 12, 10"), and control the first switch (S1, S3, S5, S7) to be opened and the second switch (S2, S4, S6, S8) to be closed when the voltage is less than a specific value, the second battery pack (11, 11', 13, 11") supplies power; when the voltage difference between the first battery pack (10, 10', 12, 10") and the second battery pack (11, 11', 13, 11") is less than a preset value, the control device controls the first switch (S1, S3, S5, S7) to close again and the first battery pack (10, 10', 12, 10") and the second battery pack (11, 11', 13, 11") are powered in parallel.

5. The power system according to claim 3, **characterized in that** the control device is further configured to obtain a voltage of the first battery pack (10, 10', 12, 10"), and control an external power source to charge the first battery pack (10, 10', 12, 10") when the voltage is less than a specific value; when the voltage difference between the first battery pack (10, 10', 12, 10") and the second battery pack (11, 11', 13, 11") is less than a preset value, the control device controls the second switch (S2, S4, S6, S8) to close, so that the first battery pack (10, 10', 12, 10") and the second battery pack (11, 11', 13, 11") are charged in parallel.

6. The power system according to any one of the preceding claims, **characterized in that**, the control device comprises a first detection unit electrically connected to the first battery pack (10, 10', 12, 10"), a second detection unit electrically connected to the second battery pack (11, 11', 13, 11"), and a control unit electrically connected to the first battery pack (10, 10', 12, 10") and the second battery pack (11, 11', 13, 11"), respectively, the first detection unit is configured to detect the voltage of the first battery pack (10, 10', 12, 10") and transmit it to the control unit, the second detection unit is configured to detect the voltage of the second battery pack and transmit it to the control unit for controlling the opening or closing of the first switch (S1, S3, S5, S7)/ second switch (S2, S4, S6, S8).

7. The power system according to any one of the preceding claims, **characterized in that** the preset value is 5V.

8. The power system according to any one of the preceding claims, **characterized in that** the load (20) is a power tool, the first battery pack (10, 10', 12, 10") and the second battery pack (11, 11', 13, 11") are used to supply power to the power tool in parallel, and the power system is received in the battery-receiving housing of the power tool.

9. The power system according to any one of the preceding claims, **characterized in that** the load (20) is a charger, the first battery pack (10, 10', 12, 10") and the second battery pack (11, 11', 13, 11") are charged in parallel by the charger, and the power system is received in the battery-receiving portion of the charger.

10. A power system, which comprises a first battery pack (10, 10', 12, 10") and a second battery pack (11, 11', 13, 11") arranged in parallel;
**characterized in that** the power system further comprises:
a first diode (14) connected in series between the first battery pack (10, 10', 12, 10") and a load (20), and a second diode (15) connected in series between the second battery pack (11, 11', 13, 11") and the load (20), wherein the first diode (14) is connected to the same pole of the first battery pack (10, 10', 12, 10"), and the second diode (15) is connected to the same pole of the second battery pack (11, 11', 13, 11").
